# EUROPÄISCHE PATENTANMELDUNG

(11) **EP 4 187 688 A1**
(43) Veröffentlichungstag der Anmeldung: **31.05.2023**
(21) Anmeldenummer: 21210297.4
(22) Anmeldetag: 24.11.2021
(51) Int. Cl.: H01M 50/107, H01M 50/167, H01M 50/559

(54) **ENERGIESPEICHERZELLE, VERBUND AUS ENERGIESPEICHERZELLEN UND HERSTELLUNGSVERFAHREN**

(71) Anmelder: VARTA Microbattery GmbH, 73479 Ellwangen Jagst (DE)
(72) Erfinder: Ensling, David, 73479 Ellwangen (DE); Kieninger, Dominik, 73492 Rainau (DE); Pytlik, Edward, 73479 Ellwangen (DE)
(74) Vertreter: Ostertag & Partner Patentanwälte mbB

(57) **Zusammenfassung**

Bekannt ist eine Energiespeicherzelle (100), die einen Elektroden-Separator-Verbund (104) mit der Sequenz Anode (105) / Separator (116) / Kathode (108) in Form eines zylindrischen Wickels mit einer ersten und einer zweiten endständigen Stirnseite (104a, 104b) und einem dazwischen liegenden Wickelmantel (104c) umfasst. Weiterhin umfasst die Zelle ein luft- und flüssigkeitsdicht verschlossenes Gehäuse, das einen metallischen Gehäusebecher (101) mit einer endständigen kreisförmigen Öffnung und eine Deckelbaugruppe (102) mit einem kreisförmigen Rand (102a), welche die kreisförmige Öffnung verschließt, aufweist, sowie eine ringförmige Dichtung (103) aus einem elektrisch isolierenden Material, die den kreisförmigen Rand (102a) der Deckelbaugruppe (102) umschließt und den Gehäusebecher (101) und die Deckelbaugruppe (102) elektrisch voneinander isoliert. Der Gehäusebecher (101) umfasst in axialer Abfolge einen Boden (101a), einen Zentralabschnitt (101b) und einen Verschlussabschnitt (101c), wobei der Zentralabschnitt (101b) zylindrisch ausgebildet ist und in dem Zentralabschnitt (101b) der Wickelmantel (104c) des als Wickel ausgebildeten Elektroden-Separator-Verbunds (104) mit der Innenseite des Gehäusebechers (101) in Kontakt steht, und in dem Verschlussabschnitt (101c) die ringförmige Dichtung (103) in einem Presskontakt mit der Deckelbaugruppe (102) und der Innenseite des Gehäusebechers (101) steht. Der Gehäusebecher (101) weist in dem Verschlussabschnitt (101c) einen die kreisförmige Öffnung definierenden Öffnungsrand (101d) auf, der radial nach innen über den von der Dichtung (103) umschlossenen Rand (102a) der Deckelbaugruppe (102) umgebogen ist und der die Deckelbaugruppe (102) einschließlich der Dichtung (103) in der kreisförmigen Öffnung des Gehäusebechers (101) formschlüssig fixiert. Es wird vorgeschlagen, dass der radial nach innen umgebogene Öffnungsrand (101d) des Gehäusebechers (101) eine höhere Wandstärke aufweist als der Gehäusebecher (101) in dem Zentralabschnitt (101b). Weiterhin wird ein Verbund aus solchen Energiespeicherzellen sowie ein Verfahren zur Herstellung eines solchen Verbundes vorgeschlagen.

## Beschreibung

### ANWENDUNGSGEBIET UND STAND DER TECHNIK

Die nachstehend beschriebene Erfindung betrifft eine Energiespeicherzelle, einen Verbund aus Energiespeicherzellen und ein Herstellungsverfahren.

Elektrochemische Energiespeicherelemente sind dazu in der Lage, gespeicherte chemische Energie durch eine Redoxreaktion in elektrische Energie umzuwandeln. Die einfachste Form eines elektrochemischen Energiespeicherelements ist die elektrochemische Zelle. Sie umfasst eine positive und eine negative Elektrode, die von einem Separator voneinander getrennt sind. Bei einer Entladung werden an der negativen Elektrode durch einen Oxidationsprozess Elektronen freigesetzt. Hieraus resultiert ein Elektronenstrom, der von einem externen elektrischen Verbraucher abgegriffen werden kann, für den die elektrochemische Zelle als Energielieferant dient. Zugleich kommt es zu einem der Elektrodenreaktion entsprechenden lonenstrom innerhalb der Zelle. Dieser lonenstrom durchquert den Separator und wird durch einen ionenleitenden Elektrolyten ermöglicht.

Wenn die Entladung reversibel ist, also die Möglichkeit besteht, die bei der Entladung erfolgte Umwandlung von chemischer Energie in elektrische Energie wieder umzukehren und die Zelle wieder zu laden, spricht man von einer sekundären Zelle. Die bei sekundären Zellen allgemein übliche Bezeichnung der negativen Elektrode als Anode und die Bezeichnung der positiven Elektrode als Kathode bezieht sich auf die Entladefunktion der elektrochemischen Zelle.

Für viele Anwendungen werden als Energiespeicherelemente heute sekundäre Lithium-Ionen-Zellen eingesetzt, da diese hohe Ströme bereitstellen können und sich durch eine vergleichsweise hohe Energiedichte auszeichnen. Sie basieren auf dem Einsatz von Lithium, welches in Form von Ionen zwischen den Elektroden der Zelle hin und her wandern kann. Die negative Elektrode und die positive Elektrode einer Lithium-Ionen-Zelle werden in der Regel von sogenannten Kompositelektroden gebildet, die neben elektrochemisch aktiven Komponenten auch elektrochemisch inaktive Komponenten umfassen.

Als elektrochemisch aktive Komponenten (Aktivmaterialien) für sekundäre Lithium-Ionen-Zellen kommen prinzipiell sämtliche Materialien in Frage, die Lithium-Ionen aufnehmen und wieder abgeben können. Für die negative Elektrode werden hierfür beispielsweise Partikel auf Kohlenstoffbasis, wie beispielsweise graphitischer Kohlenstoff, eingesetzt. Als Aktivmaterialien für die positive Elektrode können beispielsweise Lithiumcobaltoxid (LiCoO₂), Lithiummanganoxid (LiMn₂O₄), Lithiumeisenphosphat (LiFePO₄) oder Derivate hiervon eingesetzt werden. Die elektrochemisch aktiven Materialien sind in der Regel in Partikelform in den Elektroden enthalten.

Als elektrochemisch inaktive Komponenten umfassen die Kompositelektroden im Allgemeinen einen flächigen und/oder bandförmigen Stromkollektor, beispielsweise eine metallische Folie, der als Träger für das jeweilige Aktivmaterial dient. Der Stromkollektor für die negative Elektrode (Anodenstromkollektor) kann beispielsweise aus Kupfer oder Nickel und der Stromkollektor für die positive Elektrode (Kathodenstromkollektor) beispielsweise aus Aluminium gebildet sein. Weiterhin können die Elektroden als elektrochemisch inaktive Komponenten einen Elektrodenbinder (z. B. Polyvinylidenfluorid (PVDF) oder ein anderes Polymer, beispielsweise Carboxymethylzellulose), leitfähigkeitsverbessernde Additive und andere Zusätze umfassen. Der Elektrodenbinder gewährleistet die mechanische Stabilität der Elektroden und häufig auch die Haftung des Aktivmaterials auf den Stromkollektoren.

Als Elektrolyten umfassen Lithium-Ionen-Zellen in der Regel Lösungen von Lithiumsalzen wie Lithiumhexafluorophosphat (LiPF₆) in organischen Lösungsmitteln (z. B. Ether und Ester der Kohlensäure).

Die Kompositelektroden werden bei der Herstellung einer Lithium-Ionen-Zelle mit einem oder mehreren Separatoren zu einem Verbundkörper kombiniert. Hierbei werden die Elektroden und Separatoren meist unter Druck, gegebenenfalls auch durch Lamination oder durch Verklebung, miteinanderverbunden. Die grundsätzliche Funktionsfähigkeit der Zelle kann dann durch Tränkung des Verbunds mit dem Elektrolyten hergestellt werden.

In vielen Ausführungsformen wird der Verbundkörper in Form eines Wickels gebildet oder zu einem Wickel verarbeitet. In der Regel umfasst er die Sequenz positive Elektrode / Separator / negative Elektrode. Häufigwerden Verbundkörper als sogenannte Bizellen mit den möglichen Sequenzen negative Elektrode / Separator / positive Elektrode / Separator/ negative Elektrode oder positive Elektrode / Separator / negative Elektrode / Separator / positive Elektrode hergestellt.

Für Anwendungen im Automobilbereich, für E-Bikes oder auch für andere Anwendungen mit hohem Energiebedarf wie z.B. in Werkzeugen werden Lithium-Ionen-Zellen mit möglichst hoher Energiedichte benötigt, die gleichzeitig in der Lage sind, mit hohen Strömen beim Laden und Entladen belastet zu werden.

Häufig sind Zellen für die genannten Anwendungen als zylindrische Rundzellen ausgebildet, beispielsweise mit dem Formfaktor 21 × 70 (Durchmesser mal Höhe in mm) Zellen dieser Art umfassen stets einen Verbundkörper in Form eines Wickels. Moderne Lithium-Ionen-Zellen dieses Formfaktors können bereits eine Energiedichte von bis zu 270 Wh/kg erreichen. Diese Energiedichte wird allerdings nur als Zwischenschritt angesehen. Vom Markt werden bereits Zellen mit noch höheren Energiedichten gefordert.

In der WO 2017/215900 A1 sind zylindrische Rundzellen beschrieben, bei denen der Elektroden-Separator-Verbund sowie dessen Elektroden bandförmig ausgebildet sind und in Form eines Wickels vorliegen. Die Elektroden weisen jeweils mit Elektrodenmaterial beladene Stromkollektoren auf. Entgegengesetzt gepolte Elektroden sind innerhalb des Elektroden-Separator-Verbunds versetzt zueinander angeordnet, so dass Längsränder der Stromkollektoren der positiven Elektroden an einer Seite und Längsränder der Stromkollektoren der negativen Elektroden an einer weiteren Seite aus dem Wickel austreten. Zur elektrischen Kontaktierung der Stromkollektoren weist die Zelle eine Kontaktplatte auf, die auf einer Stirnseite des Wickels aufsitzt und mit einem Längsrand eines der Stromkollektoren durch Verschweißung verbunden ist. Dadurch ist es möglich, den Stromkollektor und damit auch die dazugehörige Elektrode über seine / ihre gesamte Länge elektrisch zu kontaktieren. Dies senkt den Innenwiderstand innerhalb der beschriebenen Zelle sehr deutlich. Das Auftreten großer Ströme kann in der Folge sehr viel besser abgefangen und auch Wärme kann besser aus dem Wickel abgeführt werden.

Zylindrische Rundzellen wie die in der WO 2017/215900 A1 werden meist als Teil eines Zellverbunds eingesetzt, in dem mehrere Zellen seriell und/oder parallel miteinander verschaltet sind. Häufig ist es gewünscht, die Zellen zum Abgreifen einer elektrischen Spannung nur an einer ihrer Stirnseiten kontaktieren zu müssen. Es ist entsprechend vorteilhaft, an einer der Stirnseiten sowohl einen mit der positiven Elektrode der Zelle verbundenen Anschlusspol als auch einen mit der negativen Elektrode der Zelle verbundenen Anschlusspol vorzusehen.

Das Gehäuse zylindrischer Rundzellen umfasst in der Regel einen Gehäusebecher, der zur Aufnahme des gewickelten Elektroden-Separator-Verbunds dient, sowie eine Deckelbaugruppe, die die Öffnung des Gehäusebechers verschließt. Zwischen der Deckelbaugruppe und dem Gehäusebecher ist eine Dichtung angeordnet, die zum einen der Abdichtung des Zellgehäuses dient, zum anderen aber auch die Funktion hat, die Deckelbaugruppe und den Gehäusebecher elektrisch voneinander zu isolieren. Die Dichtung wird zur Montage meist auf den Rand der Deckelbaugruppe aufgezogen. Zum Verschluss der Rundzellen ist in aller Regel der Öffnungsrand des Gehäusebechers radial nach innen über den von der Dichtung umschlossenen Rand der Deckelbaugruppe umgebogen (Bördelprozess), so dass die Deckelbaugruppe einschließlich der Dichtung in der Öffnung des Gehäusebechers formschlüssig fixiert ist.

Ein Beispiel für eine solche Rundzelle ist in Fig. 3 der EP 3188280 A1 dargestellt. Es ist relativ problemlos möglich, zwecks Integration der dargestellten Zelle in einen Zellverbund die Deckelbaugruppe (Bezugszeichen 270) mit einer geeigneten Stromleiterschiene zu verschweißen, die herausstehende Polkappe (Bezugszeichen 217) bietet hierfür beste Voraussetzungen. Schwieriger ist jedoch die elektrische Anbindung des Gehäusebechers. Möchte man diesen an der gleichen Stirnseite kontaktieren, auf der sich die Deckelbaugruppe befindet, lässt sich die Stromleiterschiene nur auf den radial nach innen umgebogenen Öffnungsrand (Bezugszeichen 213) des Gehäusebechers schweißen. Das Problem dabei ist, dass es hierbei leicht zu Beschädigungen der Dichtung kommen kann, die in unmittelbarem Kontakt mit dem umgebogenen Öffnungsrand steht, da diese thermischen Belastungen gegenüber, wie sie beim Schweißen typischerweise auftreten, empfindlich ist. Rundzellen mit einem klassischen Zellgehäuse wie dem in der EP 3188280 A1 beschriebenen sind daher für eine Anschweißung eines Stromleiters an den Öffnungsrand nicht zugänglich.

### AUFGABE UND LÖSUNG

Der vorliegenden Erfindung lag die Aufgabe zugrunde, Energiespeicherzellen bereitzustellen, die sich durch eine hohe Energiedichte auszeichnen und die effizient in einen Zellverbund integriert werden können. Weiterhin sollen sich die Energiespeicherzellen auch durch eine verbesserte Sicherheit auszeichnen.

Diese Aufgabe wird durch die Energiespeicherzelle mit den Merkmalen des Anspruchs 1 gelöst. Auch der Verbund aus Energiespeicherzellen mit den Merkmalen des Anspruchs 13 und das Herstellungsverfahren mit den Merkmalen des Anspruchs 14 sind Gegenstand der Erfindung. Bevorzugte Ausführungsformen der Erfindung finden sich in den abhängigen Ansprüchen 2 bis 12.

Die erfindungsgemäße Energiespeicherzelle weist stets die unmittelbar folgenden Merkmale a. bis f. auf:
a. Die Zelle umfasst einen Elektroden-Separator-Verbund mit der Sequenz Anode / Separator / Kathode,
b. der Elektroden-Separator-Verbund liegt in Form eines zylindrischen Wickels mit einer ersten und einer zweiten endständigen Stirnseite und einem dazwischen liegenden Wickelmantel vor,
c. die Zelle umfasst ein luft- und flüssigkeitsdicht verschlossenes Gehäuse, das einen metallischen Gehäusebecher mit einer endständigen kreisförmigen Öffnung und eine Deckelbaugruppe mit einem kreisförmigen Rand, welche die kreisförmige Öffnung verschließt, aufweist,
d. die Zelle umfasst eine ringförmige Dichtung aus einem elektrisch isolierenden Material, die den kreisförmigen Rand der Deckelbaugruppe umschließt und den Gehäusebecher und die Deckelbaugruppe elektrisch voneinander isoliert,
e. der Gehäusebecher umfasst in axialer Abfolge einen Boden, einen Zentralabschnitt und einen Verschlussabschnitt, wobei
   - der Zentralabschnittzylindrisch ausgebildet ist und in dem Zentralabschnitt der Wickelmantel des als Wickel ausgebildeten Elektroden-Separator-Verbunds mit der Innenseite des Gehäusebechers in Kontakt steht, und
   - in dem Verschlussabschnitt die ringförmige Dichtung in einem Presskontakt mit der Deckelbaugruppe und der Innenseite des Gehäusebechers steht, und
f. der Gehäusebecher weist in dem Verschlussabschnitt einen die kreisförmige Öffnung definierenden Öffnungsrand auf, der radial nach innen über den von der Dichtung umschlossenen Rand der Deckelbaugruppe umgebogen ist und der die Deckelbaugruppe einschließlich der Dichtung in der kreisförmigen Öffnung des Gehäusebechers formschlüssig fixiert,
   Besonders zeichnet sich die erfindungsgemäße Energiespeicherzelle dadurch aus, dass
g. der radial nach innen umgebogene Öffnungsrand des Gehäusebechers eine höhere Wandstärke aufweist als der Gehäusebecher in dem Zentralabschnitt.

Durch diese Maßnahme wird gewährleistet, dass sich Stromleiterschienen auf den radial nach innen umgebogenen Öffnungsrand des Gehäusebechers aufschweißen lassen ohne dass Folgeprobleme bei der Dichtung auftreten. Die erhöhte Dicke des Öffnungsrandes gewährleistet, dass sich die beim Schweißen generierte Wärme besser verteilen kann, so dass lokale Überhitzungen und ein Aufschmelzen der Dichtung vermieden werden können.

Der Elektroden-Separator-Verbunds steht mit der Innenseite des Gehäusebechers bevorzugt in unmittelbarem Kontakt. Besonders bevorzugt liegt er unmittelbar an der Innenseite des Gehäusebechers an. In einigen Ausführungsformen kann es allerdings vorgesehen sein, die Innenseite, beispielsweise mittels einer Folie, elektrisch zu isolieren. In diesem Fall steht der Elektroden-Separator-Verbunds in Kontakt über die Folie mit der Innenwand in Kontakt.

Der Boden des Gehäusebechers ist bevorzugt kreisförmig ausgebildet. Der Gehäusebecher wird meist durch Tiefziehen gebildet. Es ist aber auch möglich, den Becher durch Einschweißen eines Bodens in ein rohrförmiges Halbteil zu bilden.

Bei der erfindungsgemäßen Energiespeicherzelle handelt es sich bevorzugt um eine zylindrische Rundzelle. Der Elektroden-Separator-Verbund umfasst entsprechend die Anode und die Kathode bevorzugt in Form von Bändern. Darüber hinaus umfasst er bevorzugt einen bandförmigen Separator oder zwei bandförmige Separatoren. Die Stirnseiten sind bevorzugt durch einen kreisförmigen Rand begrenzt.

Bevorzugt liegt die Höhe als zylindrische Rundzelle ausgebildeten der erfindungsgemäßen Energiespeicherzelle im Bereich von 50 mm bis 150 mm. Ihr Durchmesser liegt bevorzugt im Bereich von 15 mm bis 60 mm. Zylindrische Rundzellen mit diesen Formfaktoren eignen sich insbesondere zur Stromversorgung elektrischer Antriebe von Kraftfahrzeugen.

In einer besonders bevorzugten Ausführungsform der Erfindung ist die erfindungsgemäße Energiespeicherzelle eine Lithium-Ionen-Zelle.

Für die Elektroden der Energiespeicherzelle können im Grunde sämtliche für sekundäre Lithium-lonen-Zellen bekannten Elektrodenmaterialien verwendet werden.

In den negativen Elektroden können als Aktivmaterialien Partikel auf Kohlenstoffbasis wie graphitischer Kohlenstoff oder zur Interkalation von Lithium befähigte, nicht-graphitische Kohlenstoffmaterialien, bevorzugt ebenfalls in Partikelform, eingesetzt werden. Alternativ oder zusätzlich kann auch Lithiumtitanat (Li₄Ti₅O₁₂) oder ein Derivat desselben in der negativen Elektrode enthalten sein, bevorzugt ebenfalls in Partikelform. Weiterhin kann die negative Elektrode als Aktivmaterial mindestens ein Material aus der Gruppe mit Silizium, Aluminium, Zinn, Antimon oder eine Verbindung oder Legierung dieser Materialien, die Lithium reversibel ein- und auslagern kann, beispielsweise Siliziumoxid (insbesondere SiOₓ mit 0 < x < 2), enthalten, gegebenenfalls in Kombination mit Aktivmaterialien auf Kohlenstoffbasis. Zinn, Aluminium, Antimon und Silizium in der Lage, mit Lithium intermetallische Phasen zu bilden. Die Kapazität zur Aufnahme von Lithium übersteigt dabei, insbesondere im Fall von Silizium, die von Graphit oder vergleichbaren Materialien um ein Vielfaches. Oft werden Mischungen aus Silizium- und Kohlenstoff-basierten Speichermaterialien eingesetzt. Weiterhin eignen sich auch dünne Anoden aus metallischem Lithium.

Für die positiven Elektroden kommen als Aktivmaterialien beispielsweise Lithium-Metalloxid-Verbindungen und Lithium-Metallphosphat-Verbindungen wie LiCoO₂ und LiFePO₄ in Frage. Weiterhin gut geeignet sind insbesondere Lithiumnickelmangancobaltoxid (NMC) mit der Summenformel Li-NiₓMn_{y}Co_{z}O₂ (wobei x + y + z typischerweise 1 ist), Lithiummanganspinell (LMO) mit der Summenformel LiMn₂O₄, oder Lithiumnickelcobaltaluminiumoxid (NCA) mit der Summenformel LiNiₓCo_{y}Al_{z}O₂ (wobei x + y + z typischerweise 1 ist). Auch Derivate hiervon, beispielsweise Lithiumnickelmangancobaltaluminiumoxid (NMCA) mit der Summenformel Li_{1.11}(Ni_{0.40}Mn_{0.39}Co_{0.16}Al_{0.05})_{0.89}O₂ oder Li₁₊ₓM-O Verbindungen und/oder Mischungen der genannten Materialien können eingesetzt werden. Auch die kathodischen Aktivmaterialien werden bevorzugt partikulär eingesetzt.

Daneben enthalten die Elektroden einer erfindungsgemäßen Energiespeicherzelle bevorzugt einen Elektrodenbinder und/oder ein Additiv zur Verbesserung der elektrischen Leitfähigkeit. Die Aktivmaterialien sind bevorzugt in eine Matrix aus dem Elektrodenbinder eingebettet, wobei benachbarte Partikel in der Matrix bevorzugt in unmittelbarem Kontakt miteinander stehen. Leitmittel dienen dazu, die elektrische Leitfähigkeit der Elektroden zu erhöhen. Übliche Elektrodenbinder basieren beispielsweise auf Polyvinylidenfluorid (PVDF), (Li-)Polyacrylat, Styrol-Butadien-Kautschuk oder Carboxymethylzellulose oder auch Mischungen unterschiedlicher Binder. Übliche Leitmittel sind Ruß, feine Grafite, Kohlenstofffasern, Carbon-Nanotubes und Metallpulver.

Die erfindungsgemäße Energiespeicherzelle umfasst bevorzugt einen Elektrolyten, im Falle einer Lithium-Ionen-Zelle insbesondere einen Elektrolyten auf der Basis mindestens eines Lithiumsalzes wie beispielsweise Lithiumhexafluorophosphat (LiPF₆), das in einem organischen Lösungsmittel gelöst vorliegt (z. B. in einer Mischung organischer Carbonate oder einem cyclischen Ether wie THF oder einem Nitril). Andere einsetzbare Lithium-Salze sind beispielsweise Lithiumtetrafluoroborat (LiBF₄), Lithiumbis(trifluoromethansulfonyl)imid (LiTFSI), Lithiumbis(fluorosulfonyl)imid (LiFSI) und Lithiumbis(oxalato)borat (LiBOB).

Die Nennkapazität einer als zylindrische Rundzelle ausgebildeten erfindungsgemäßen Energiespeicherzelle auf Lithium-Ionen-Basis beträgt bevorzugt bis zu 15000 mAh. Mit dem Formfaktor von 21 × 70 hat die Energiespeicherzelle in einer Ausführungsform als Lithium-Ionen-Zelle bevorzugt eine Nennkapazität im Bereich von 1500 mAh bis 7000 mAh, besonders bevorzugt im Bereich von 3000 bis 5500 mAh. Mit dem Formfaktor von 18 × 65 hat die Zelle in einer Ausführungsform als Lithium-Ionen-Zelle bevorzugt eine Nennkapazität im Bereich von 1000 mAh bis 5000 mAh, besonders bevorzugt im Bereich von 2000 bis 4000 mAh.

In der Europäischen Union sind Herstellerangaben zu Angaben betreffend die Nennkapazitäten von sekundären Batterien streng reglementiert. So haben etwa Angaben zur Nennkapazität von sekundären Nickel-Cadmium-Batterien auf Messungen gemäß den Normen IEC/EN 61951-1 und IEC/EN 60622, Angaben zur Nennkapazität von sekundären Nickel-Metallhydrid-Batterien auf Messungen gemäß der Norm IEC/EN 61951-2, Angaben zur Nennkapazität von sekundären Lithium-Batterien auf Messungen gemäß der Norm IEC/EN 61960 und Angaben zur Nennkapazität von sekundären Blei-Säure-Batterien auf Messungen gemäß der Norm IEC/EN 61056-1 zu basieren. Jegliche Angaben zu Nennkapazitäten in der vorliegenden Anmeldung basieren bevorzugt ebenfalls auf diesen Normen.

Besonders bevorzugt zeichnet sich die erfindungsgemäße Energiespeicherzelle durch mindestens eines der unmittelbar folgenden Merkmale a. bis c. aus:
a. Der radial nach innen umgebogene Öffnungsrand des Gehäusebechers ist um einen Faktor im Bereich von 1,5 bis 2 dicker ausgebildet als der Gehäusebecher in dem Zentralabschnitt.
b. Der Gehäusebecher weist in dem Zentralabschnitt eine Wandstärke im Bereich von 0,1 mm bis 0,4 mm, bevorzugt im Bereich von 0,25 mm bis 0,3 mm, auf.
c. Der radial nach innen umgebogene Öffnungsrand des Gehäusebechers weist eine Wandstärke im Bereich von 0,15 mm bis 0,8 mm, bevorzugt im Bereich von 0,375 mm bis 0,6 mm, auf.

Es ist bevorzugt, dass die unmittelbar vorstehenden Merkmale a. und b. sowie a. und c. in Kombination realisiert sind. Besonders bevorzugt sind alle drei unmittelbar vorstehenden Merkmale a. bis c. in Kombination realisiert.

Der Boden des Gehäusebechers weist bevorzugt eine Dicke im Bereich von 0,2 mm bis 2 mm auf.

Zur Realisierung der höheren Wandstärke des Öffnungsrands kann bei der Herstellung des Gehäusebechers bereits ein Ausgangsmaterial verwendet werden, das in Bereichen, die zur Bildung des Öffnungsrandes vorgesehen sind, verdickt ist. Besonders bevorzugt ist es allerdings, zur Realisierung der höheren Wandstärke den Öffnungsrand durch entsprechende Biegung oder Faltung der Wand des Gehäusebechers zu verstärken.

Entsprechend zeichnet sich die erfindungsgemäße Energiespeicherzelle bevorzugt durch mindestens eines der unmittelbar folgenden Merkmale a. bis c. aus:
a. Der radial nach innen umgebogene Öffnungsrand des Gehäusebechers ist [zur Erzielung der doppellagig ausgebildet.
b. Der doppellagig ausgebildete Öffnungsrand ist durch ein Falten oder Umbiegen des Öffnungsrandes gebildet.
c. Der doppellagig ausgebildete Öffnungsrand weist einen U-förmigen Querschnitt auf, insbesondere als Ergebnis der Faltung oder Umbiegung gemäß unmittelbar vorstehendem Merkmal b..

Es ist bevorzugt, dass die unmittelbar vorstehenden Merkmale a. und b., besonders bevorzugt alle drei unmittelbar vorstehenden Merkmale a. bis c., in Kombination realisiert sind.

Die Faltung oder Umbiegung zwecks Ausbildung des doppellagigen Öffnungsrands kann nach außen oder nach innen hin erfolgen. Dies resultiert in unterschiedlichen Varianten des doppellagigen Öffnungsrands.

Besonders bevorzugt zeichnet sich die erfindungsgemäße Energiespeicherzelle durch mindestens eines der unmittelbar folgenden Merkmale a. bis c. aus:
a. Der doppellagig ausgebildete Öffnungsrand weist eine erste Lage auf, die unmittelbar in Kontakt mit der den Rand der Deckelbaugruppe umschließenden Dichtung steht, sowie eine zweite Lage parallel zur ersten auf auf einer der Dichtung abgewandten Seite der ersten Lage.
b. Die erste Lage wird begrenzt durch eine Schnittkante, die radial nach außen weist.
c. Die zweite Lage wird begrenzt durch eine Schnittkante, die radial nach außen weist.

Es ist bevorzugt, dass die unmittelbar vorstehenden Merkmale a. und b. oder die unmittelbar vorstehenden Merkmale b. und c. in Kombination realisiert sind.

Bei der Variante mit den Merkmalen a. und b. ist besonders vorteilhaft, dass die nach außen weisende Schnittkante vor Korrosion geschützt ist, da sie durch die zweite Lage und die Außenwand des Bechers vor der Umgebung der Zelle abgeschirmt wird.

Der Gehäusebecher besteht bevorzugt aus Aluminium, einer Aluminiumlegierung oder einem Stahblech, beispielsweise einem vernickelten Stahlblech.

Geeignete Aluminiumlegierungen für den Gehäusebecher sind beispielsweise Al-Legierungen vom Typ 1235, 1050, 1060, 1070, 3003, 5052, Mg3, Mg212 (Serie 3000) und GM55. Weiterhin geeignet sind AlSi, AlCuTi, AlMgSi, AlSiMg, AlSiCu, AlCuTiMg und AlMg. Der Aluminiumanteil besagter Legierungen liegt bevorzugt oberhalb von 99,5 %.

Besonders bevorzugt zeichnet sich die erfindungsgemäße Energiespeicherzelle durch mindestens eines der unmittelbar folgenden Merkmale a. bis d. aus:
a. Der radial nach innen umgebogene Öffnungsrand, insbesondere der doppellagig ausgebildete Öffnungsrand, umfasst eine erste, innenliegende Seite, die in unmittelbarem Kontakt mit der Dichtung steht, und eine zweite, von der Dichtung abgewandte Seite.
b. Die zweite Seite hat die Form oder umfasst eine kreisringförmige ebene Fläche.
c. Der Kreisring weist eine Breite im Bereich von 1 mm bis 5 mm, bevorzugt im Bereich von 1 mm bis 3mm, besonders bevorzugt im Bereich von 1,2 mm bis 1,3 mm, auf.
d. Die kreisringförmige ebene Fläche schließt mit der Wand des Gehäusebechers in dem Zentralabschnitt einen Winkel von 90° ein.

Es ist bevorzugt, dass die unmittelbar vorstehenden Merkmale a. und b. und c. oder die unmittelbar vorstehenden Merkmale a. und b. und d. oder die unmittelbar vorstehenden Merkmale a. bis d. in Kombination realisiert sind.

In diesen bevorzugten Ausführungsformen wird ein Anschweißen einer Ableiterschiene dadurch erleichtert, dass der radial nach innen umgebogene Öffnungsrand gezielt vergrößert und flach ausgebildet wird.

Besonders bevorzugt zeichnet sich die erfindungsgemäße Energiespeicherzelle durch mindestens eines der unmittelbar folgenden Merkmale a. bis c. aus:
a. Der Zentralabschnitt und der Verschlussabschnitt werden durch eine Einbuchtung, welche die Außenseite des Gehäusebechers ringförmig umläuft, getrennt.
b. Der Gehäusebecher weist in dem Zentralabschnitt und dem Verschlussabschnitt einen identischen maximalen Außendurchmesser auf.
c. Im Bereich der Einbuchtung ist der Außendurchmesser des Gehäusebechers um das 4- bis 12-fache der Wandstärke des Gehäusebechers in diesem Bereich reduziert.

Es ist bevorzugt, dass zumindest die unmittelbar vorstehenden Merkmale a. und b. in Kombination realisiert sind. Besonders bevorzugt sind alle drei unmittelbar vorstehenden Merkmale a. bis c. in Kombination realisiert.

Besonders bevorzugt zeichnet sich die erfindungsgemäße Energiespeicherzelle durch mindestens eines der unmittelbar folgenden Merkmale a. bis c. aus:
a. Die ringförmige Dichtung umfasst ein erstes ringförmiges Segment, das zwischen der Einbuchtung und der ins Gehäuseinnere weisenden Seite der Deckelbaugruppe angeordnet ist und in Presskontakt mit einem die Einbuchtung definierenden Wandabschnitt und dieser Seite der Deckelbaugruppe steht.
b. Die ringförmige Dichtung umfasst ein zweites ringförmiges Segment, das zwischen dem radial nach innen umgebogenen Öffnungsrand und der vom Gehäuseinneren abgewandten Seite der Deckelbaugruppe angeordnet ist und von dem Öffnungsrand (senkrecht) auf diese Seite des Deckelbaugruppe gepresst wird.
c. Die ringförmige Dichtung umfasst ein drittes ringförmiges Segment, das zwischen dem Gehäusebecher und dem Rand der Deckelbaugruppe angeordnet ist und von der Wand des Gehäusebechers in der Verschlusszone auf den Rand der Deckelbaugruppe gepresst wird.

Es ist bevorzugt, dass alle drei unmittelbar vorstehenden Merkmale a. bis c. in Kombination realisiert sind.

Bevorzugt liegt die ringförmige Dichtung in dem Verschlussabschnitt komprimiert vor. Sie wird bevorzugt von mehreren Seiten gegen den Rand der Deckelbaugruppe gepresst.

Wie eingangs ausgeführt, soll die vorliegende Erfindung Energiespeicherzellen bereitstellen, die sich durch eine hohe Energiedichte auszeichnen. Dies ist besonders gut möglich, wenn der Elektrodenwickel effizient an das Gehäuse angebunden wird, wie es in der eingangs erwähnten WO 2017/215900 A1 beschrieben ist.

Besonders bevorzugt zeichnet sich die erfindungsgemäße Energiespeicherzelle durch mindestens eines der unmittelbar folgenden Merkmale a. bis e. aus:
a. Die Anode des Elektroden-Separator-Verbunds umfasst einen Anodenstromkollektor, der einen ersten Längsrand und einen dazu parallelen zweiten Längsrand aufweist.
b. Der Anodenstromkollektor umfasst einen Hauptbereich, der mit einer Schicht aus negativem Elektrodenmaterial beladen ist, sowie einen freien Randstreifen, der sich entlang seines ersten Längsrands erstreckt und der nicht mit dem negativen Elektrodenmaterial beladen ist.
c. Die Kathode des Elektroden-Separator-Verbunds umfasst einen Kathodenstromkollektor, der einen ersten Längsrand und einen dazu parallelen zweiten Längsrand aufweist.
d. Der Kathodenstromkollektor umfasst einen Hauptbereich, der mit einer Schicht aus positivem Elektrodenmaterial beladen ist, sowie einen freien Randstreifen, der sich entlang seines ersten Längsrands erstreckt und der nicht mit dem Elektrodenmaterial beladen ist.
e. Die Anode und die Kathode sind innerhalb des Elektroden-Separator-Verbunds derart angeordnet, dass der erste Längsrand des Anodenstromkollektors aus der ersten endständigen Stirnseite und der erste Längsrand des Kathodenstromkollektors aus der zweiten endständigen Stirnseite des Elektroden-Separator-Verbunds austritt.

Es ist bevorzugt, dass alle fünf unmittelbar vorstehenden Merkmale a. bis e. in Kombination realisiert sind.

In einer Weiterbildung dieser bevorzugten Ausführungsform ist es bevorzugt, dass sich die erfindungsgemäße Energiespeicherzelle durch mindestens eines der unmittelbar folgenden Merkmale a. bis d. auszeichnet:
a. die Energiespeicherzelle umfasst ein Kontaktblech, das auf dem ersten Längsrand des Anodenstromkollektors aufsitzt und die erste endständige Stirnseite abdeckt oder auf dem ersten Längsrand des Kathodenstromkollektors aufsitzt und die zweite endständige Stirnseite abdeckt mit diesem durch Verschweißung verbunden ist.
b. Das Kontaktblech ist mit dem ersten Längsrand des Anodenstromkollektors oder dem ersten Längsrand des Kathodenstromkollektors durch Verschweißung verbunden.
c. Das Kontaktblech ist mit dem Boden des Gehäusebechers, insbesondere durch Verschweißung, verbunden.
d. Das Kontaktblech ist Teil der Deckelbaugruppe oder mit der Deckelbaugruppe mittelbar oder unmittelbar elektrisch verbunden.

Es ist bevorzugt, dass zu mindest die unmittelbar vorstehenden Merkmale a. bis c. oder die Merkmale a. und b. und d. in Kombination realisiert sind.

In einigen besonders bevorzugten Ausführungsformen umfasst die Energiespeicherzelle ein Kontaktblech, das auf dem ersten Längsrand des Anodenstromkollektors aufsitzt und mit diesem durch Verschweißung verbunden ist, und ein weiteres Kontaktblech, das auf dem ersten Längsrand des Kathodenstromkollektors aufsitzt und mit diesem durch Verschweißung verbunden ist.

In einer möglichen Weiterbildung ist es bevorzugt, dass sich die erfindungsgemäße Energiespeicherzelle durch das unmittelbar folgende Merkmal a. auszeichnet:
a. Der erste Längsrand des Anodenstromkollektors oder der erste Längsrand des Kathodenstromkollektors sitzt unmittelbar auf dem Boden des Gehäusebechers auf und ist mit diesem durch Verschweißung verbunden.

In dieser Ausführungsform ist also einer der Stromkollektoren unmittelbar mit dem Gehäuse bzw. dem Gehäusebecher verbunden. In einer bevorzugten Weiterbildung dieser Ausführungsform sitzt auf dem Längsrand des anderen Stromkollektors ein Kontaktblech auf. Dieses ist dann elektrisch mit der Deckelbaugruppe verbunden.

In einer besonders bevorzugten Ausführungsform der Erfindung zeichnet sich das mit dem Anodenstromkollektor elektrisch verbundene Kontaktblech durch mindestens eines der unmittelbar folgenden Merkmale a. oder b. aus:
a. Das Kontaktblech besteht aus Nickel oder Kupfer oder Titan oder eine Nickel- oder Kupfer- oder Titanlegierung oder Edelstahl, beispielsweise vom Typ 1.4303 oder 1.4404 oder vom Typ SUS304, oder aus nickelplattiertem Kupfer.
b. Das Kontaktblech besteht aus dem gleichen Material wie der Anodenstromkollektor.

In einer weiteren besonders bevorzugten Ausführungsform der Erfindung zeichnet sich das mit dem Kathodenstromkollektor elektrisch verbundene Kontaktblech durch mindestens eines der unmittelbar folgenden Merkmale a. oder b. aus:
a. Das Kontaktblech besteht aus Aluminium odereinerAluminiumlegierung.
b. Das Kontaktblech besteht aus dem gleichen Material wie der Anodenstromkollektor.

Besonders bevorzugt zeichnen sich das mit dem Anodenstromkollektor verbundene Kontaktblech und/oder das mit dem Kathodenstromkollektor elektrisch verbundene Kontaktblech durch mindestens eines der unmittelbar folgenden Merkmale a. bis g. aus:
a. Das Kontaktblech weist eine bevorzugt gleichmäßige Dicke im Bereich von 50 µm bis 600 µm, bevorzugt im Bereich von 150 µm bis 350 µm, auf.
b. Das Kontaktblech weist zwei sich gegenüberliegenden Flachseiten auf und erstreckt sich im Wesentlichen nur in einer Dimension.
c. Das Kontaktblech ist eine Scheibe oder eine polygonale Platte.
d. Das Kontaktblech ist derart dimensioniert, dass es mindestens 60 %, bevorzugt mindestens 70 %, besonders bevorzugt mindestens 80 % der ersten endständigen oder der zweiten endständigen Stirnseite abdeckt.
e. Das Kontaktblech weist mindestens eine Durchbrechung, insbesondere mindestens ein Loch und oder mindestens einen Schlitz, auf.
f. Das Kontaktblech weist mindestens eine Sicke auf, die auf einer Flachseite des Kontaktblechs als längliche Vertiefung und auf der gegenüberliegenden Flachseite als längliche Erhöhung zu Tage tritt, wobei das Kontaktblech mit der Flachseite, welche die längliche Erhöhung trägt, auf dem ersten Längsrand des jeweiligen Stromkollektors aufsitzt.
g. Das Kontaktblech ist im Bereich der Sicke mit dem ersten Längsrand des jeweiligen Stromkollektors verschweißt, insbesondere über eine oder mehrere in der Sicke angeordnete Schweißnähte.

Es ist besonders bevorzugt, dass die unmittelbar vorstehenden Merkmale a. und b. und d. in Kombination miteinander realisiert sind. In einer bevorzugten Ausführungsform sind die Merkmale a. und b. und d. in Kombination mit einem der Merkmale c. oder e. oder den Merkmalen f. und g realisiert. Besonders bevorzugt sind alle Merkmale a. bis g. in Kombination miteinander realisiert.

Die möglichst großflächige Abdeckung der Stirnseite ist für das thermische Management der erdungsgemäßen Energiespeicherzelle von Bedeutung. Je größer die Abdeckung ist, desto eher ist es möglich, den ersten Längsrand des jeweiligen Stromkollektors möglichst überseine gesamte Länge zu kontaktieren. In Elektroden-Separator-Verbund gebildete Wärme kann so gut über das Kontaktblech abgeführt werden.

Es hat sich in einigen Ausführungsformen als vorteilhaft erwiesen, den Längsrand des Stromkollektors einer Vorbehandlung zu unterziehen, bevor das Kontaktblech aufgesetzt wird. Insbesondere kann in den Längsrand mindestens eine Vertiefung eingefalzt werden, die zu der mindestens einen Sicke bzw. der länglichen Erhöhung auf der der ersten endständigen Stirnseite zugewandten Flachseite des Kontaktblechs korrespondiert.

Der Längsrand des Stromkollektors kann auch durch eine Vorbehandlung einer gerichteten Umformung unterzogen worden sein. Beispielsweise kann er in eine definierte Richtung umgebogen sein.

Die mindestens eine Durchbrechung in dem Kontaktblech kann beispielsweise zweckmäßig sein, um den Elektroden-Separator-Verbund mit einem Elektrolyten tränken zu können.

Der Anodenstromkollektor, der Kathodenstromkollektor und der Separator oder die Separatoren der erfindungsgemäßen Zelle weisen bevorzugt die folgenden Dimensionen auf:
- Eine Länge im Bereich von 0,5 m bis 25 m
- Eine Breite im Bereich 40 mm bis 145 mm

In dem als Wickel ausgebildeten Elektroden-Separator-Verbund liegen die bandförmige Anode, die bandförmige Kathode und der oder die bandförmigen Separatoren bevorzugt spiralförmig aufgewickelt vor. Zur Herstellung des Elektroden-Separator-Verbunds werden die bandförmigen Elektroden gemeinsam mit dem oder den bandförmigen Separatoren einer Wickelvorrichtung zugeführt und in dieser bevorzugt um eine Wickelachse herum spiralförmig aufgewickelt. In einigen Ausführungsformen werden die Elektroden und der Separator hierzu auf einen zylindrischen oder hohlzylindrischen Wickelkern aufgewickelt, der auf einem Wickeldorn sitzt und nach dem Wickeln im Wickel verbleibt.

Der Wickelmantel kann beispielsweise durch eine Kunststofffolie oder ein Klebeband gebildet sein. Es ist auch möglich, dass der Wickelmantel durch eine oder mehrere Separatorwindungen gebildet ist.

Die Stromkollektoren des erfindungsgemäßen Energiespeicherzelle dienen dazu, im jeweiligen Elektrodenmaterial enthaltene elektrochemisch aktive Komponenten möglichst großflächig elektrisch zu kontaktieren. Bevorzugt bestehen die Stromkollektoren aus einem Metall oder sind zumindest oberflächlich metallisiert.

Im Falle einer als Lithium-Ionen-Zelle ausgebildeten erfindungsgemäßen Energiespeicherzelle eignen sich als Metall für den Anodenstromkollektor beispielsweise Kupfer oder Nickel oder auch andere elektrisch leitfähige Materialien, insbesondere Kupfer- und Nickellegierungen oder mit Nickel beschichtete Metalle. Als Kupferlegierung können insbesondere Werkstoffe vom Typ EN CW-004A bzw. EN CW-008A mit einem Kupferanteil von mindestens 99,9% eingesetzt werden. Als Nickellegierungen kommen insbesondere Legierungen vom Typ NiFe, NiCu, CuNi, NiCr und NiCrFe in Frage. Als Nickellegierungen kommen insbesondere Legierungen vom Typ NiFe, NiCu, CuNi, NiCr und NiCrFe in Frage. Auch Edelstahl kommt grundsätzlich in Frage, beispielsweise vom Typ 1.4303 oder 1.4404 oder vom Typ SUS304.

Als Metall für den Kathodenstromkollektor eignen sich im Falle einer als Lithium-Ionen-Zelle ausgebildeten erfindungsgemäßen Energiespeicherzelle insbesondere Aluminium oder auch andere elektrisch leitfähige Materialien, darunter auch Aluminiumlegierungen.

Geeignete Aluminiumlegierungen für den Kathodenstromkollektor sind beispielsweise Al-Legierungen vom Typ 1235, 1050, 1060, 1070, 3003, 5052, Mg3, Mg212 (Serie 3000) und GM55. Weiterhin geeignet sind AlSi, AlCuTi, AlMgSi, AlSiMg, AlSiCu, AlCuTiMg und AlMg. Der Aluminiumanteil besagter Legierungen liegt bevorzugt oberhalb von 99,5 %.

Bevorzugt handelt es sich bei dem Anodenstromkollektor und/oder dem Kathodenstromkollektor jeweils um eine bandförmige Metallfolie mit einer Dicke im Bereich von 4 µm bis 30 µm.

Neben Folien können als Stromkollektoren allerdings auch andere bandförmige Substrate wie metallische oder metallisierte Vliese oder offenporige metallische Schäume oder Streckmetalle verwendet werden.

Die Stromkollektoren sind bevorzugt beidseitig mit dem jeweiligen Elektrodenmaterial beladen.

Es ist bevorzugt, dass die Längsränder des oder der Separatoren die Stirnseiten des als Wickel ausgebildeten Elektroden-Separator-Verbunds bilden.

Die erfindungsgemäße Zelle zeichnet sich bevorzugt dadurch aus, dass in die Deckelbaugruppe eine CID-Funktion integriert ist, die gewährleistet, dass im Falle eines zu hohen Drucks in der Zelle der Druck aus dem Gehäuse entweichen kann und gleichzeitig der elektrische Kontakt zwischen der Deckelbaugruppe und dem Elektroden-Separator-Verbund entweichen kann.

Besonders bevorzugt zeichnet sich die erfindungsgemäße Energiespeicherzelle entsprechend durch mindestens eines der unmittelbar folgenden Merkmale a. bis c. aus:
a. Die Deckelbaugruppe umfasst eine metallische Scheibe mit einer metallischen Membran, die sich bei einem Überdruck innerhalb des Gehäuses nach außen wölbt oder birst.
b. Die Scheibe mit der Membran steht in elektrischem Kontakt mit einer metallischen Polkappe, die die Deckelbaugruppe nach außen abschließt.
c. Die Scheibe mit der Membran steht in elektrischem Kontakt mit einem elektrischen Leiter, der elektrisch an den Anodenstromkollektor oder an den Kathodenstromkollektor angekoppelt ist.

Es ist bevorzugt, dass die unmittelbar vorstehenden Merkmale a. bis c. in Kombination realisiert sind.

Um die Auswirkungen des Schweißvorgangs auf die Dichtung zusätzlich zu beschränken, ist es erfindungsgemäß bevorzugt, besonders temperaturbeständige Kunststoffe als Dichtungsmaterial einzusetzen.

In einer Weiterbildung dieser bevorzugten Ausführungsform ist es entsprechend bevorzugt, dass sich die erfindungsgemäße Energiespeicherzelle durch mindestens eines der unmittelbar folgenden Merkmale a. und b. auszeichnet:
a. Die Dichtung besteht aus einem Kunststoffmaterial, das einen Schmelzpunkt > 300 °C aufweist.
b. Bei dem Kunststoffmaterial handelt es sich um ein Polyetheretherketon (PEEK), ein Polyimid (PI), ein Polyphenylensulfid (PPS) oder ein Polytetrafluorethylen (PTFE).

Es ist bevorzugt, dass die unmittelbar vorstehenden Merkmale a. und b. in Kombination realisiert sind.

Der erfindungsmäße Verbund aus Energiespeicherzellen zeichnet sich stets durch die folgenden Merkmale aus:
a. Der Verbund umfasst mindestens zwei der oben beschriebenen Energiespeicherzellen und
b. der Verbund umfasst einen elektrischen Leiter aus einem Metall, der mit den radial nach innen umgebogenen Öffnungsrändern der Gehäusebecher der mindestens zwei Energiespeicherzellen durch Verschweißung verbunden ist.

Bei dem Leiter kann es sich beispielsweise um einen Leiter, insbesondere eine Schiene, aus Aluminium oder einer Aluminiumlegierung handeln.

Als Aluminiumlegierung kommen für den Leiter beispielsweise Al-Legierungen vom Typ 1235, 1050, 1060, 1070, 3003, 5052, Mg3, Mg212 (Serie 3000) und GM55 in Frage. Weiterhin geeignet sind AlSi, AlCuTi, AlMgSi, AlSiMg, AlSiCu, AlCuTiMg und AlMg. Der Aluminiumanteil besagter Legierungen liegt bevorzugt oberhalb von 99,5 %.

Das erfindungsmäße Verfahren zeichnet sich stets durch die folgenden Merkmale aus:
a. Es werden mindestens zwei der oben beschriebenen Energiespeicherzellen und ein metallischer Leiter bereitgestellt und
b. der metallische Leiter wird mit dem radial nach innen umgebogenen Öffnungsrand einer der Energiespeicherzellen und mit dem radial nach innen umgebogenen Öffnungsrand einer anderen der Energiespeicherzellen durch Verschweißung verbunden.

Besonders bevorzugt wird die Verschweißung mittels eines Lasers bewirkt.

### KURZBESCHREIBUNG DER ZEICHNUNGEN

Weitere Merkmale und Vorteile der Erfindung ergeben sich aus den Ansprüchen und aus der nachfolgenden Beschreibung von bevorzugten Ausführungsbeispielen der Erfindung in Verbindung mit den Zeichnungen. Die einzelnen Merkmale können dabei jeweils für sich oder in Kombination miteinander verwirklicht sein.

### In den Zeichnungen zeigen schematisch

- Fig. 1 eine erste Ausführungsform einer erfindungsgemäßen Energiespeicherzelle (Querschnittsdarstellung),
- Fig. 2 eine Gesamtansicht (Querschnittsdarstellung) der in Fig. 1 dargestellten Energiespeicherzelle.
- Fig. 3 eine zweite Ausführungsform einer erfindungsgemäßen Energiespeicherzelle (Querschnittsdarstellung),
- Fig. 4 eine dritte Ausführungsform einer erfindungsgemäßen Energiespeicherzelle (Querschnittsdarstellung),
- Fig. 5 eine Deckelbaugruppe, wie sie in den Ausführungsformen der erfindungsgemäßen Energiespeicherzelle gemäß den Figuren 1 bis 4 zum Einsatz kommt (Querschnittsdarstellung),
- Fig. 6 einen Elektroden-Separator-Verbund, der Bestandteil eines erfindungsgemäßen Energiespeicherzelle ist, sowie dessen Komponenten, und

### DETAILLIERTE BESCHREIBUNG DERAUSFÜHRUNGSBEISPIELE

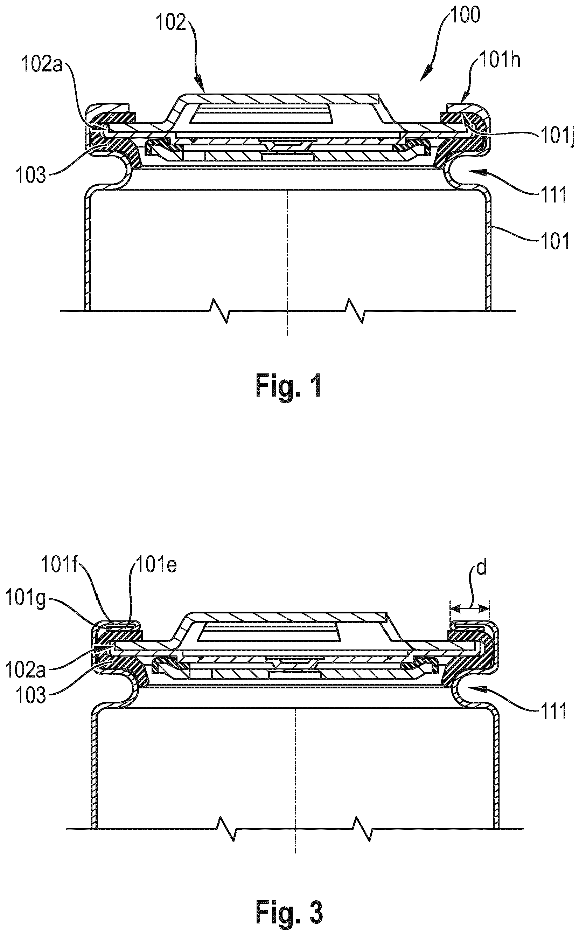

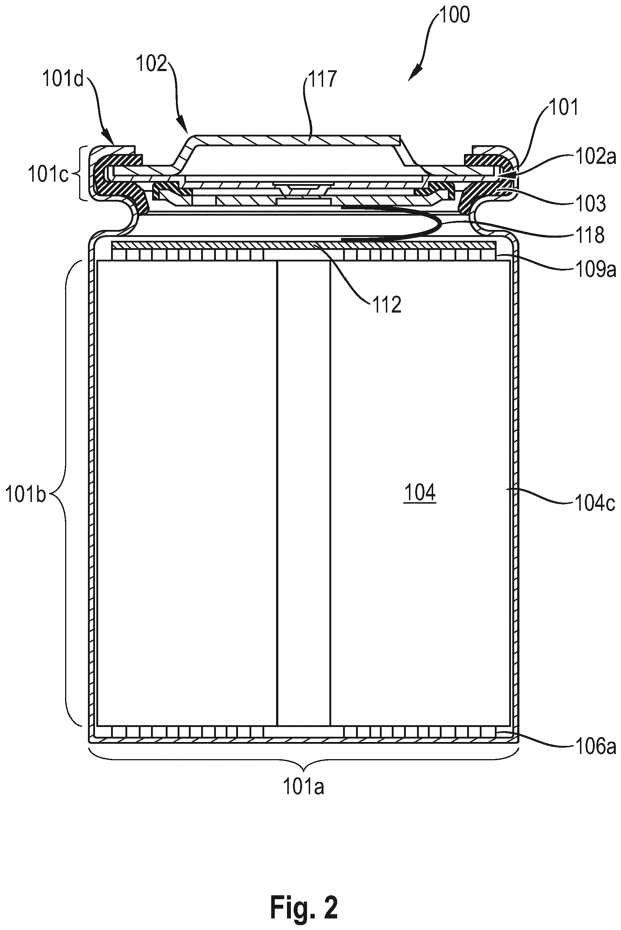

Die **Figs. 1** **und** **2** zeigen eine erfindungsgemäße Energiespeicherzelle 100 mit einem luft- und flüssigkeitsdicht verschlossenen Gehäuse, das einen metallischen Gehäusebecher 101 mit einer endständigen kreisförmigen Öffnung und eine Deckelbaugruppe 102 mit einem kreisförmigen Rand 102a, welche die kreisförmige Öffnung verschließt, umfasst. Die Zelle umfasst weiterhin eine ringförmige Dichtung 103 aus einem elektrisch isolierenden Material, die den kreisförmigen Rand 102a der Deckelbaugruppe 102 umschließt und den Gehäusebecher 101 und die Deckelbaugruppe 102 elektrisch voneinander isoliert. Der Gehäusebecher 101 umfasst in axialer Abfolge einen Boden 101a, einen Zentralabschnitt 101b und einen Verschlussabschnitt 101c, wobei der Zentralabschnitt 101b zylindrisch ausgebildet ist und in dem Zentralabschnitt 101b der Wickelmantel 104c des als Wickel ausgebildeten Elektroden-Separator-Verbunds 104 mit der Innenseite des Gehäusebechers 101 in Kontakt steht, und in dem Verschlussabschnitt 101c die ringförmige Dichtung 103 in einem Presskontakt mit der Deckelbaugruppe 102 und der Innenseite des Gehäusebechers 101 steht. Der Gehäusebecher 101 weist in dem Verschlussabschnitt 101c einen die kreisförmige Öffnung definierenden Öffnungsrand 101d auf, der radial nach innen über den von der Dichtung 103 umschlossenen Rand 102a der Deckelbaugruppe 102 umgebogen ist und der die Deckelbaugruppe 102 einschließlich der Dichtung 103 in der kreisförmigen Öffnung des Gehäusebechers 101 formschlüssig fixiert. Der radial nach innen umgebogene Öffnungsrand 101d des Gehäusebechers 101 weist eine höhere Wandstärke auf als der Gehäusebecher 101 in dem Zentralabschnitt 101b. Es ist in der Folge möglich, Verschweißungsvorgänge an dem Öffnungsrand 101d vorzunehmen ohne dass die Dichtung 103 Schaden nimmt.

Die Zelle 100 umfasst auch einen Elektroden-Separator-Verbund 104 in Form eines zylindrischen Wickels mit der Sequenz Anode / Separator / Kathode, der allerdings hier nicht detailliert dargestellt ist. Zu erkennen sind lediglich der Längsrand 106a des Anodenstromkollektors 106, der aus der Stirnseite 104a des Elektroden-Separator-Verbunds 104 austritt, und der Längsrand 109a des Anodenstromkollektors 109, der aus der Stirnseite 104b des Elektroden-Separator-Verbunds 104 austritt. Der Längsrand 106a ist bevorzugt über seine gesamte Länge unmittelbar mit dem Gehäuseboden 101a verschweißt. Der Längsrand 109a ist bevorzugt über seine gesamte Länge unmittelbar mit dem Kontaktblech 112 verschweißt. Das Kontaktblech 112 ist wiederum über den elektrischen Leiter 118 mit der Deckelbaugruppe 102 verbunden, die unten noch näher beschrieben wird.

Die Zelle 100 weist üblicherweise eine Höhe im Bereich von 60 mm bis 10 mm auf, ihr Durchmesser liegt bevorzugt im Bereich von 20 mm bis 50 mm. Der Gehäusebecher 101 weist in dem Zentralabschnitt 101b üblicherweise eine Wandstärke im Bereich von 0,1 mm bis 0,3 mm auf. Der radial nach innen umgebogene Öffnungsrand 101d des Gehäusebechers 101 ist um einen Faktor im Bereich von 1,5 bis 2 dicker ausgebildet als der Gehäusebecher 101 in dem Zentralabschnitt 101b.

Die in Fig. 3 dargestellte Zelle 100 unterscheidet sich von der in den Figuren 1 und 2 dargestellten Zelle lediglich darin, dass der Öffnungsrand 101d in Folge einer Faltung doppellagig ausgebildet ist und einen U-förmigen Querschnitt aufweist. Der doppellagig ausgebildete Öffnungsrand 101d weist die erste Lage 101e auf, die unmittelbar in Kontakt mit der den Rand 102a der Deckelbaugruppe 102 umschließenden Dichtung 103 steht, sowie die zweite Lage 101f, die sich auf der der Dichtung 103 abgewandten Seite der ersten Lage 101e parallel zur ersten Lage erstreckt. Die erste Lage 101e wird begrenzt durch die Schnittkante 101g, die radial nach außen weist und in Folge dessen hervorragend vor Korrosion geschützt ist. Der doppellagig ausgebildete Öffnungsrand 101d umfasst eine erste, innenliegende Seite 101j, die in unmittelbarem Kontakt mit der Dichtung 103 steht, und eine zweite, von der Dichtung 103 abgewandte Seite 101h. Diese zweite Seite 101h hat die Form einer kreisringförmigen, ebene, Fläche und weist eine Breite d im Bereich von 1,2 mm bis 4 mm auf. Sie schließt mit der Wand des Gehäusebechers 101 in dem Zentralabschnitt 101b einen Winkel von 90° ein.

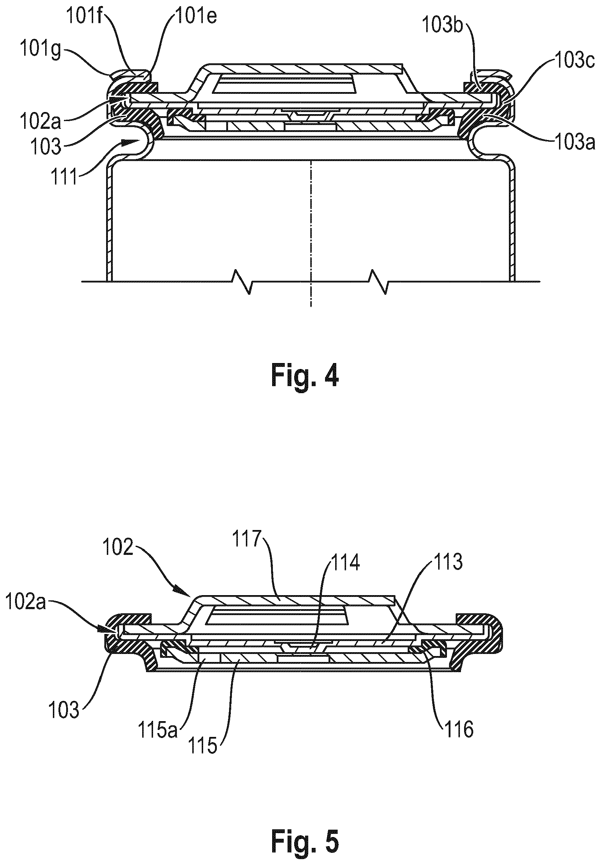

Die in Fig. 4 dargestellte Zelle 100 unterscheidet sich von der in den Figuren 1 und 2 dargestellten Zelle lediglich darin, dass der Öffnungsrand 101d in Folge einer Faltung doppellagig ausgebildet ist und einen U-förmigen Querschnitt aufweist. Der doppellagig ausgebildete Öffnungsrand 101d weist die erste Lage 101e auf, die unmittelbar in Kontakt mit der den Rand 102a der Deckelbaugruppe 102 umschließenden Dichtung 103 steht, sowie die zweite Lage 101f, die sich auf der der Dichtung 103 abgewandten Seite der ersten Lage 101e parallel zurersten Lage 101e erstreckt. Die zweite Lage 101f wird begrenzt durch die Schnittkante 101g, die radial nach außen weist.

In **Fig. 5** ist die Deckelbaugruppe 102 dargestellt, die in den Ausführungsformen der erfindungsgemäßen Energiespeicherzelle 100 gemäß den Figuren 1 bis 4 zum Einsatz kommt. Diese umfasst die Scheibe 113 mit der metallischen Membran 114, die sich bei einem Überdruck innerhalb des Gehäuses nach außen wölbt oder birst. Die Scheibe 113 mit der Membran 114 steht in elektrischem und in unmittelbarem Kontakt mit der Polkappe 117, die die Deckelbaugruppe 102 nach außen abschließt. Weiterhin steht sie in elektrischem Kontakt mit der inneren Kontaktscheibe 115, allerdings ausschließlich über die Membran 114. Ansonsten sind die Scheibe 113 und die Scheibe 115 durch den Isolator 116 elektrisch voneinander isoliert. Wölbt sich die Membran 114 in Folge eines Überdrucks, der über die Durchbrechung 115a unmittelbar auf die Membran wirken kann, nach außen, bricht der elektrische Kontakt zwischen der Scheibe 113 und der Scheibe 115 ab. Bei hohen Drücken kann die Membran auch bersten.

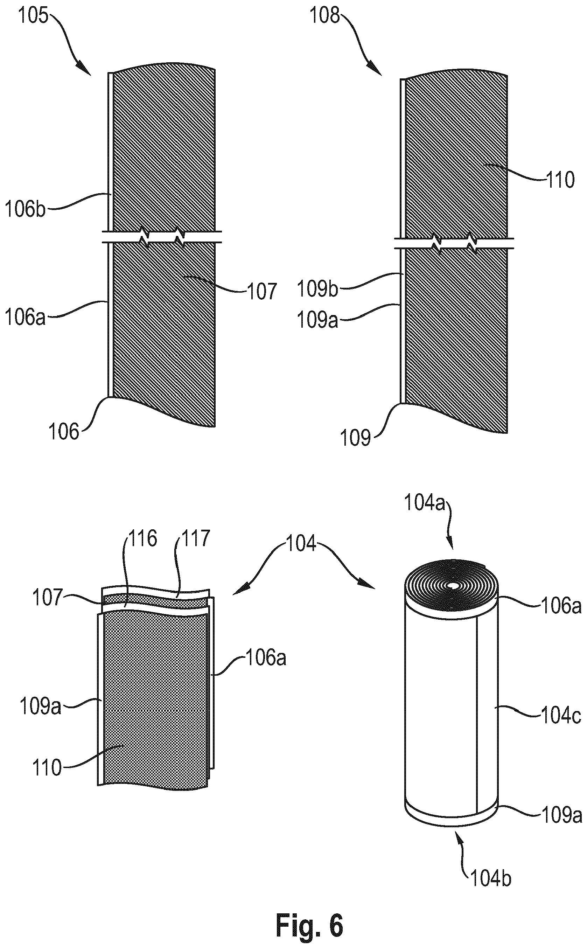

Der Aufbau des Elektroden-Separator-Verbund 104 wird anhand von **Fig. 6** veranschaulicht. Der Verbund 104 umfasst die bandförmige Anode 105 mit dem bandförmigen Anodenstromkollektor 106, der einen ersten Längsrand 106a und einen dazu parallelen zweiten Längsrand aufweist. Bei dem Anodenstromkollektor 106 handelt es sich um eine Folie aus Kupfer oder Nickel. Diese umfasst einen bandförmigen Hauptbereich, der mit einer Schicht aus negativem Elektrodenmaterial 107 beladen ist, sowie einen freien Randstreifen 106b, der sich entlang seines ersten Längsrands 106a erstreckt und der nicht mit dem Elektrodenmaterial 107 beladen ist. Weiterhin umfasst der Verbund 104 die bandförmige Kathode 108 mit dem bandförmigen Kathodenstromkollektor 109, der einen ersten Längsrand 109a und einen dazu parallelen zweiten Längsrand aufweist. Bei dem Kathodenstromkollektor 109 handelt es sich um eine Aluminiumfolie. Er umfasst einen bandförmigen Hauptbereich, der mit einer Schicht aus positivem Elektrodenmaterial 110 beladen ist, sowie einen freien Randstreifen 109b, der sich entlang seines ersten Längsrands 109a erstreckt und der nicht mit dem Elektrodenmaterial 110 beladen ist. Beide Elektroden sind einzeln in ungewickeltem Zustand dargestellt.

Die Anode 105 und die Kathode 108 sind innerhalb des Elektroden-Separator-Verbunds 104 versetzt zueinander angeordnet, so dass der erste Längsrand 106a des Anodenstromkollektors 106 aus der ersten endständigen Stirnseite 104a und der erste Längsrand 109a des Kathodenstromkollektors 109 aus der zweiten endständigen Stirnseite 104b des Elektroden-Separator-Verbunds 104 austritt. Die versetzte Anordnung geht aus der Darstellung links unten hervor. Dort sind auch die zwei bandförmigen Separatoren 116 und 117 dargestellt, die im Wickel die Elektroden 105 und 108 voneinandertrennen.

In der Darstellung rechts unten ist der Elektroden-Separator-Verbunds 104 in gewickelter Form dargestellt, wie er in einer Energiespeicherzelle gemäß einer der Figuren 1 bis 4 zum Einsatz kommen kann. Die aus den Stirnseiten 104a und 104b austretenden Elektrodenränder 106a und 109a sind gut zu erkennen. Der Wickelmantel 104c wird durch eine Kunststofffolie gebildet.

## Patentansprüche

1. Energiespeicherzelle (100) mit den folgenden Merkmalen:
a. Die Zelle umfasst einen Elektroden-Separator-Verbund (104) mit der Sequenz Anode (105) / Separator (116) / Kathode (108),
b. der Elektroden-Separator-Verbund (104) liegt in Form eines zylindrischen Wickels mit einer ersten endständigen Stirnseite (104a) und einer zweiten endständigen Stirnseite (104b) und einem dazwischen liegenden Wickelmantel (104c) vor,
c. die Zelle umfasst ein luft- und flüssigkeitsdicht verschlossenes Gehäuse, das einen metallischen Gehäusebecher (101) mit einer endständigen kreisförmigen Öffnung und eine Deckelbaugruppe (102) mit einem kreisförmigen Rand (102a), welche die kreisförmige Öffnung verschließt, aufweist,
d. die Zelle umfasst eine ringförmige Dichtung (103) aus einem elektrisch isolierenden Material, die den kreisförmigen Rand (102a) der Deckelbaugruppe (102) umschließt und den Gehäusebecher (101) und die Deckelbaugruppe (102) elektrisch voneinander isoliert,
e. der Gehäusebecher (101) umfasst in axialer Abfolge einen Boden (101a), einen Zentralabschnitt (101b) und einen Verschlussabschnitt (101c), wobei
- der Zentralabschnitt (101b) zylindrisch ausgebildet ist und in dem Zentralabschnitt (101b) der Wickelmantel (104c) des als Wickel ausgebildeten Elektroden-Separator-Verbunds (104) mit der Innenseite des Gehäusebechers (101) in Kontakt steht, und
- in dem Verschlussabschnitt (101c) die ringförmige Dichtung (103) in einem Presskontakt mit der Deckelbaugruppe (102) und der Innenseite des Gehäusebechers (101) steht,
f. der Gehäusebecher (101) weist in dem Verschlussabschnitt (101c) einen die kreisförmige Öffnung definierenden Öffnungsrand (101d) auf, der radial nach innen überden von der Dichtung (103) umschlossenen Rand (102a) der Deckelbaugruppe (102) umgebogen ist und der die Deckelbaugruppe (102) einschließlich der Dichtung (103) in der kreisförmigen Öffnung des Gehäusebechers (101) formschlüssig fixiert,
**dadurch gekennzeichnet, dass**
g. der radial nach innen umgebogene Öffnungsrand (101d) des Gehäusebechers (101) eine höhere Wandstärke aufweist als der Gehäusebecher (101) in dem Zentralabschnitt (101b).

2. Energiespeicherzelle nach Anspruch 1 mit mindestens einem der folgenden zusätzlichen Merkmale:
a. Der radial nach innen umgebogene Öffnungsrand (101d) des Gehäusebechers (101) ist um einen Faktor im Bereich von 1,5 bis 2 dicker ausgebildet als der Gehäusebecher (101) in dem Zentralabschnitt (101b).
b. Der Gehäusebecher (101) weist in dem Zentralabschnitt (101b) eine Wandstärke im Bereich von 0,1 mm bis 0,4 mm, bevorzugt im Bereich von 0,25 mm bis 0,3 mm, auf.
c. Der radial nach innen umgebogene Öffnungsrand (101d) des Gehäusebechers (101) weist eine Wandstärke im Bereich von 0,15 mm bis 0,8 mm, bevorzugt im Bereich von 0,375 mm bis 0,6 mm, auf.

3. Energiespeicherzelle nach Anspruch 1 oder nach Anspruch 2 mit mindestens einem der folgenden zusätzlichen Merkmale:
a. Der radial nach innen umgebogene Öffnungsrand (101d) des Gehäusebechers (101) ist doppellagig ausgebildet.
b. Der doppellagig ausgebildete Öffnungsrand (101d) istdurch ein Falten des Öffnungsrandes gebildet.
c. Der doppellagig ausgebildete Öffnungsrand (101d) weist einen U-förmigen Querschnitt auf.

4. Energiespeicherzelle nach Anspruch 3 mit mindestens einem der folgenden zusätzlichen Merkmale:
a. Der doppellagig ausgebildete Öffnungsrand (101d) weist eine erste Lage (101e) auf, die unmittelbar in Kontakt mit der den Rand (102a) der Deckelbaugruppe (102) umschließenden Dichtung (103) steht, sowie eine zweite Lage (101f) parallel zur ersten auf einer der Dichtung (103) abgewandten Seite der ersten Lage (101e).
b. Die erste Lage (101e) wird begrenzt durch eine Schnittkante (101g), die radial nach außen weist.
c. Die zweite Lage (101f) wird begrenzt durch eine Schnittkante (101g), die radial nach außen weist.

5. Energiespeicherzelle nach einem der vorhergehenden Ansprüche mit mindestens einem der folgenden zusätzlichen Merkmale:
a. Der radial nach innen umgebogene Öffnungsrand (101d), insbesondere der doppellagig ausgebildete Öffnungsrand, umfasst eine erste, innenliegende Seite (101j), die in unmittelbarem Kontakt mit der Dichtung (103) steht, und eine zweite, von der Dichtung (103) abgewandte Seite (101h).
b. Die zweite Seite (101h) hat die Form oder umfasst eine kreisringförmige ebene Fläche.
c. Der Kreisring weist eine Breite (d) im Bereich von 1 mm bis 5 mm, bevorzugt im Bereich von 1 mm bis 3mm, besonders bevorzugt im Bereich von 1,2 mm bis 1,3 mm, auf.
d. Die kreisringförmige ebene Fläche schließt mit der Wand des Gehäusebechers (101) in dem Zentralabschnitt (101b) einen Winkel von 90° ein.

6. Energiespeicherzelle nach einem der vorhergehenden Ansprüche mit mindestens einem der folgenden zusätzlichen Merkmale:
a. Der Zentralabschnitt (101b) und der Verschlussabschnitt (101c) werden durch eine Einbuchtung (111), welche die Außenseite des Gehäusebechers (101) ringförmig umläuft, getrennt.
b. Der Gehäusebecher (101) weist in dem Zentralabschnitt (101b) und dem Verschlussabschnitt (101c) einen identischen maximalen Außendurchmesser auf.
c. Im Bereich der Einbuchtung (111) ist der Außendurchmesser des Gehäusebechers (101) um das 4- bis 12-fache der Wandstärke des Gehäusebechers (101) in diesem Bereich reduziert.

7. Energiespeicherzelle nach einem der vorhergehenden Ansprüche mit mindestens einem der folgenden zusätzlichen Merkmale:
a. Die ringförmige Dichtung (103) umfasst ein erstes ringförmiges Segment, (103a) das zwischen der Einbuchtung (111) und einer ins Gehäuseinnere weisenden Seite der Deckelbaugruppe (102) angeordnet ist und in Presskontakt mit einem die Einbuchtung (111) definierenden Wandabschnitt und dieser Seite der Deckelbaugruppe (102) steht.
b. Die ringförmige Dichtung (103) umfasst ein zweites ringförmiges Segment (103b), das zwischen dem radial nach innen umgebogenen Öffnungsrand (101d) und einer vom Gehäuseinneren abgewandten Seite der Deckelbaugruppe (102) angeordnet ist und von dem Öffnungsrand (101d) auf diese Seite des Deckelbaugruppe (102) gepresst wird.
c. Die ringförmige Dichtung (103) umfasst ein drittes ringförmiges Segment (103c), das zwischen dem Gehäusebecher (101) und dem Rand (102a) der Deckelbaugruppe (102) angeordnet ist und von der Wand des Gehäusebechers in der Verschlusszone (101c) auf den Rand (102a) der Deckelbaugruppe (102) gepresst wird.

8. Energiespeicherzelle nach einem der vorhergehenden Ansprüche mit mindestens einem der folgenden zusätzlichen Merkmale:
a. Die Anode (105) des Elektroden-Separator-Verbunds (104) umfasst einen Anodenstromkollektor (106), der einen ersten Längsrand (106a) und einen dazu parallelen zweiten Längsrand aufweist.
b. Der Anodenstromkollektor (106) umfasst einen Hauptbereich, der mit einer Schicht (107) aus negativem Elektrodenmaterial beladen ist, sowie einen freien Randstreifen, dersich entlang seines ersten Längsrands (106a) erstreckt und der nicht mit dem negativen Elektrodenmaterial beladen ist.
c. Die Kathode (108) des Elektroden-Separator-Verbunds (104) umfasst einen Kathodenstromkollektor (109), der einen ersten Längsrand (109a) und einen dazu parallelen zweiten Längsrand aufweist.
d. Der Kathodenstromkollektor (109) umfasst einen Hauptbereich, der mit einer Schicht aus positivem Elektrodenmaterial (110) beladen ist, sowie einen freien Randstreifen, der sich entlang seines ersten Längsrands (109a) erstreckt und der nicht mit dem Elektrodenmaterial (110) beladen ist.
e. Die Anode (105) und die Kathode (108) sind innerhalb des Elektroden-Separator-Verbunds (104) derart angeordnet, dass der erste Längsrand (106a) des Anodenstromkollektors (106) aus der ersten endständigen Stirnseite (104a) und der erste Längsrand (109a) des Kathodenstromkollektors (108) aus der zweiten endständigen Stirnseite (104b) des Elektroden-Separator-Verbunds (104) austritt.

9. Energiespeicherzelle nach Anspruch 8 mit mindestens einem der folgenden zusätzlichen Merkmale:
a. die Energiespeicherzelle umfasst ein Kontaktblech (112), das auf dem ersten Längsrand des Anodenstromkollektors aufsitzt und die erste endständige Stirnseite abdeckt oder auf dem ersten Längsrand (109a) des Kathodenstromkollektors (109) aufsitzt und die zweite endständige Stirnseite (104b) abdeckt und mit diesem durch Verschweißung verbunden ist.
b. Das Kontaktblech (112) ist mit dem ersten Längsrand des Anodenstromkollektors oder dem ersten Längsrand (109a) des Kathodenstromkollektors (109) durch Verschweißung verbunden.
c. Das Kontaktblech (112) ist mit dem Boden des Gehäusebechers, insbesondere durch Verschweißung, verbunden.
d. Das Kontaktblech (112) ist Teil der Deckelbaugruppe oder mit der Deckelbaugruppe mittelbar oder unmittelbar elektrisch verbunden.

10. Energiespeicherzelle nach Anspruch 8 oder nach Anspruch 9 mit mindestens einem der folgenden zusätzlichen Merkmale:
a. Der ersten Längsrand (106a) des Anodenstromkollektors (106) oder der erste Längsrand des Kathodenstromkollektors sitzt unmittelbar auf dem Boden (101a) des Gehäusebechers (101) auf und ist mit diesem durch Verschweißung verbunden.

11. Energiespeicherzelle nach einem der vorhergehenden Ansprüche mit mindestens einem der folgenden zusätzlichen Merkmale:
a. Die Deckelbaugruppe (102) umfasst eine Scheibe (113) mit einer metallischen Membran (114), die sich bei einem Überdruck innerhalb des Gehäuses nach außen wölbt oder birst.
b. Die Scheibe (113) mit der Membran (114) steht in elektrischem Kontakt mit einer Polkappe (117), die die Deckelbaugruppe (102) nach außen abschließt.
c. Die Scheibe (113) mit der Membran (114) steht in elektrischem Kontakt mit einem elektrischen Leiter (118), der elektrisch an den Anodenstromkollektor oder an den Kathodenstromkollektor (109) angekoppelt ist.

12. Energiespeicherzelle nach einem der vorhergehenden Ansprüche mit mindestens einem der folgenden zusätzlichen Merkmale:
a. Die Dichtung (103) besteht aus einem Kunststoffmaterial, das einen Schmelzpunkt > 300 °C aufweist.
b. Bei dem Kunststoffmaterial handelt es sich um ein Polyetheretherketon (PEEK), ein Polyimid (PI), ein Polyphenylensulfid (PPS) oder ein Polytetrafluorethylen (PTFE).

13. Verbund aus Energiespeicherzellen mit den Merkmalen
a. DerVerbund umfasst mindestens zwei Energiespeicherzellen (100) gemäß einem der Ansprüche 1 bis 10 und
b. der Verbund umfasst einen elektrischen Leiter aus einem Metall, der mit den radial nach innen umgebogenen Öffnungsrändern der Gehäusebecher der mindestens zwei Energiespeicherzellen durch Verschweißung verbunden ist.

14. Verfahren zur Herstellung eines Verbunds aus Energiespeicherzellen mit den Schritten
a. Es werden mindestens zwei Energiespeicherzellen (100) gemäß einem der Ansprüche 1 bis 7 und ein metallischer Leiter bereitgestellt und
b. der metallische Leiter wird mit dem radial nach innen umgebogenen Öffnungsrand einer der Energiespeicherzellen (100) und mit dem radial nach innen umgebogenen Öffnungsrand einer anderen der Energiespeicherzellen (100) durch Verschweißung verbunden.
